# EUROPEAN PATENT APPLICATION

(11) **EP 3 557 448 A1**
(43) Date of publication of application: **23.10.2019**
(21) Application number: 17881847.2
(22) Date of filing: 31.08.2017
(51) Int. Cl.: G06F 17/30

(54) **VOUCHER INFORMATION INPUT METHOD AND APPARATUS, AND SERVER AND STORAGE MEDIUM**

(30) Priority: 15.12.2016 CN 201611163173
(71) Applicant: Ping An Technology (Shenzhen) Co., Ltd., Shenzhen, Guangdong 518000 (CN)
(72) Inventor: YANG, Jiang, Shenzhen Guangdong 518000 (CN); YU, Hong, Shenzhen Guangdong 518000 (CN); QI, Jiaqing, Shenzhen Guangdong 518000 (CN); WANG, Jianbo, Shenzhen Guangdong 518000 (CN)
(74) Representative: Michalski Hüttermann & Partner Patentanwälte mbB
(86) International application number: PCT/CN2017/100038
(87) International publication number: WO 2018/107820

(57) **Abstract**

The present disclosure relates to a method of inputting document information, includes: assigning the same document to a preset number of user identifiers; receiving document input information of the document input through each user identifier; determining whether the document input information are the same, when the number of the document input information reaches a preset number, if the document input information are the same, recording the document input information as a correct document input information, and if the document input information are not the same, assigning the document to a review user identifier with a review permission, receiving a review document input information of the document input through the review user identifier, recording the review document input information as a correct document input information; and storing the correct document input information in a database.

## Description

The present application claims priority of China Patent Application No. 201611163173.0, titled "method and device of inputting document information", filed Dec. 15, 2016, the entire content of which is incorporated herein in its entirety.

### TECHNICAL FIELD

The present disclosure relates to computer technologies, and more particularly relates to a method of inputting document information, a device, a server, and a storage medium.

### BACKGROUND

In a conventional document information inputting method, a system assigns a document information input task to a user. In order to improve an input correct rate, an auditor is deployed for manual review directly after the user conducts the input according to the information in the document.

However, when an amount of data of the document information which needs to be input is large, for example, during preferential activities of an insurance company, business volume increases sharply. The system assigns scanned images of documents to the user. After the user inputs texts according to filled information on the images, manual reviews are performed directly, which makes auditors easy to be tired, thereby resulting in a high audit error rate and a low input correct rate.

### SUMMARY

According to various embodiments of the present disclosure, a method of inputting document information, a device, a server, and a storage medium are provided.

A method of inputting document information includes:
assigning the same document to a preset number of user identifiers;
receiving a document input information corresponding to the document input through each user identifier;
determining whether the document input information are the same, when an amount of the document input information reaches the preset number;
if the document input information are the same, recording the document input information as a correct document input information, and if the document input information are not the same, assigning the document to a review user identifier which has a review permission, receiving a review document input information of the document input through the review user identifier, and recording the review document input information as a correct document input information; and
storing the correct document input information in a database.

A device of inputting document information includes:
a document assigning module configured to assign the same document to a preset number of user identifiers;
a document input information receiving module configured to receive a document input information corresponding to the document input through each user identifier;
a document input information determining module configured to determine whether the document input information are the same, when an amount of the document input information reaches the preset number;
a correct document input information determining module configured to record the document input information as a correct document information when the document input information are the same, assign the document input information to a review user identifier with a review permission when the document input information are not the same, receive a review document input information of the document input through the review user identifier, and record the review document input information as a correct document input information; and
a correct document input information storing module configured to store the correct document input information in a database.

A server includes a memory and one or more processors, the memory stores computer-executable instructions, which when executed by the processor causes the processor to perform following steps:
assigning the same document to a preset number of user identifiers;
receiving a document input information corresponding to the document input through each user identifier;
determining whether the document input information are the same, when an amount of the document input information reaches the preset number;
if the document input information are the same, recording the document input information as a correct document input information, and if the document input information are not the same, assigning the document to a review user identifier which has a review permission, receiving a review document input information of the document input through the review user identifier, and recording the review document input information as a correct document input information; and
storing the correct document input information in a database.

One or more computer-executable non-transitory storage medium stores computer-executable instructions that, when executed on one or more processors, cause the one or more processors to perform following steps:
assigning the same document to a preset number of user identifiers;
receiving a document input information corresponding to the document input through each user identifier;
determining whether the document input information are the same, when an amount of the document input information reaches the preset number;
if the document input information are the same, recording the document input information as a correct document input information, and if the document input information are not the same, assigning the document to a review user identifier which has a review permission, receiving a review document input information of the document input through the review user identifier, and recording the review document input information as a correct document input information; and
storing the correct document input information in a database.

Details of one or more embodiments of the present application are set forth in accompanying drawings and description below. Other features, objects, and advantages of the present application will become apparent upon review of the following specification, drawings, and claims.

### BRIEF DESCRIPTION OF THE DRAWINGS

To describe the technical solutions in the embodiments of the present application or prior art more clearly, the following briefly introduces the accompanying drawings required for describing the embodiments or prior art. Apparently, the accompanying drawings in the following description merely show some embodiments of the present application. For those of ordinary skill in the art, other drawings can be acquired based on these drawings without any creative work.
FIG. 1 is a diagram of an application environment of a method of inputting document information in accordance with an embodiment;
FIG. 2 is a block diagram of a server in accordance with an embodiment;
FIG. 3 is a flow chart of a method of inputting document information in accordance with an embodiment;
FIG. 4 is a flow chart of receiving document input information in FIG. 3;
FIG. 5 is a flow chart of authorizing the review permission in accordance with an embodiment;
FIG. 6 is a flow chart of a method of inputting document information in accordance with another embodiment;
FIG. 7 is a block diagram of a device of inputting document information in accordance with an embodiment;
FIG. 8 is a block diagram of a device of inputting document information in accordance with another embodiment;
FIG. 9 is a block diagram of a document input information receiving module in FIG. 8;
FIG. 10 is a block diagram of a device of inputting document information in accordance with a still another embodiment;
FIG. 11 is a block diagram of a device of inputting document information in accordance with one more another embodiment;
FIG. 12 is an inputting interface when a type of a document input information is Chinese type in accordance with an embodiment;
FIG. 13 is an inputting interface of a PC (personal computer) when a type of a document input information is English type in accordance with an embodiment;
FIG. 14 is an inputting interface of a PC when a type of a document input information is number type in accordance with an embodiment;
FIG. 15 is an inputting interface of a PC when a type of a document input information is Chinese type in accordance with an embodiment;
FIG. 16 is an inputting interface of a mobile when a type of a document input information is number type in accordance with an embodiment.

### DETAILED DESCRIPTION OF THE EMBODIMENTS

In order to make the objects, technical solutions and advantages of the present disclosure more comprehensible, the present application will be further described in detail with reference to the accompanying drawings and embodiments. It should be understood that the specific embodiments described herein are only used to explain the present disclosure, and are not intended to limit the present disclosure.

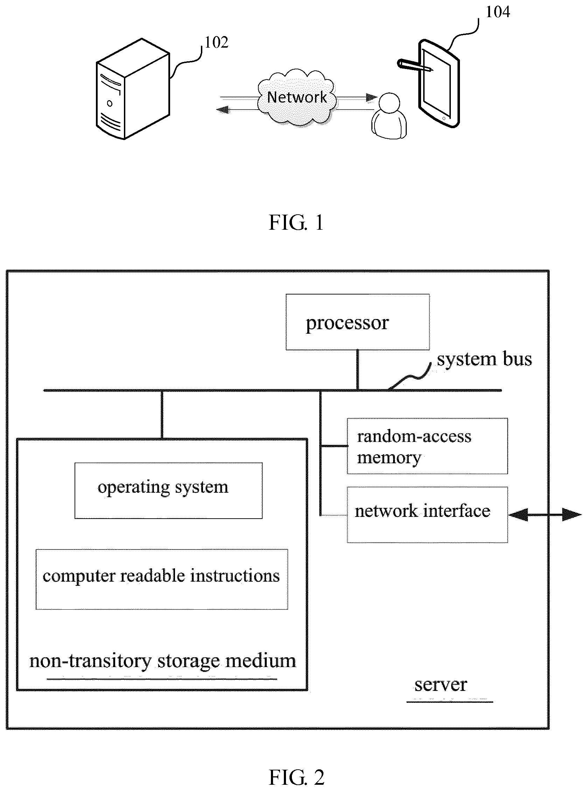

A method of inputting document information provided in embodiments of the present disclosure can be applied to an environment illustrated in FIG. 1. Referring to FIG. 1, a server 102 is capable of sending a document image to a terminal 104, receiving a document input information input through the terminal 104, determining a correct document input information, and storing the correct document input information in a database. Specifically, the server 102 communicates with the terminal 104 via a network. The server 102 assigns the same document to a preset number of user identifiers, receives document input information input by the terminal 104 where the identifier is located, determines whether the document input information are the same when an amount of the document input information reaches the preset number, records the document input information as a correct document input information if the document input information are the same, reassigns the document to a review user identifier with a review permission if a different document input information exists in the document input information, receives a review document input information input by the terminal 104 where the review user identifier with the review permission is located, and records the review document input information as the correct document input information in the database. The terminals include, but are not limited to, various personal computers, laptops, smartphones, tablets, portable wearable devices, and the like.

In one embodiment, as shown in FIG. 2, a server is provided. The server includes a processor, a non-transitory storage medium, an internal storage, and a network interface, which are connected through a system bus. The non-transitory storage medium stores an operating system and computer readable instructions. The processor is used for providing computing and control capabilities to support an operation of the entire server. The internal storage is used for providing an environment for operations of the operating system and computer readable instructions in the non-transitory storage medium. The computer readable instructions, when executed by the processor, can cause the processor to execute a method of inputting document information. The network interface is used for communicating with the terminal, receiving or sending data, such as sending a document image to the terminal, receiving document input information input through the terminal, determining a correct document input information, and storing the correct document in a database.

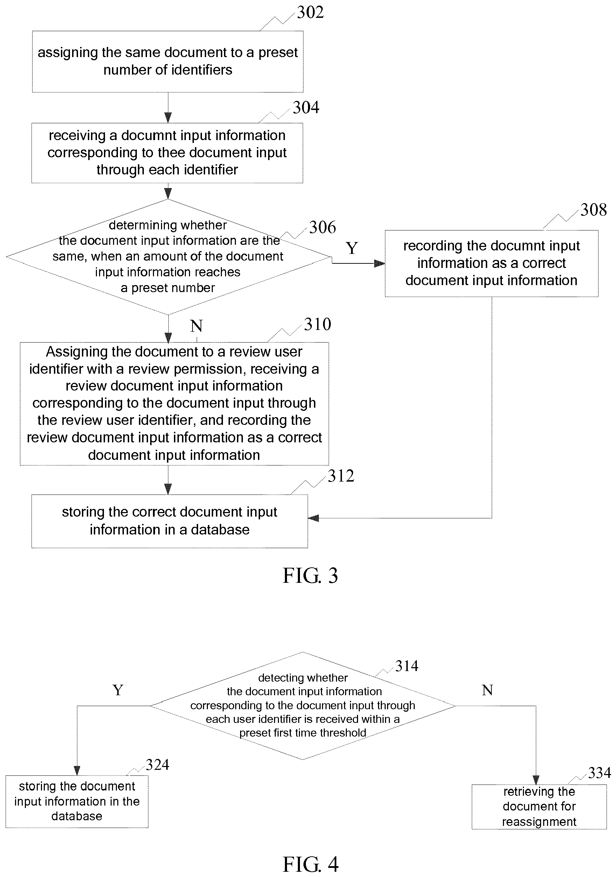

In one embodiment, as shown in FIG. 3, a method of inputting document information is provided. The method applied to the server illustrated in FIG. 1 is taken as an example for description, and includes following steps.

In step 302, the same document is assigned to a preset number of user identifiers.

The document refers to a scanned image of a papery document with handwritten information, such as scanned image of an insurance policy of an insurance company, which contains information of handwritten name, contacts, and the like of a consumer who has purchased the insurance. The document can be a scanned image of an entire document, such as a scanned image of an entire insurance policy, or a scanned image of a document portion obtained by cutting a document according to a document template, such as a scanned image of a document portion which contains handwritten name and the like.

The user identifier can be a phone number, an email account, a custom account, and the like.

In step 304, document input information corresponding to the document input through each user identifier is received.

Specifically, a user corresponding to the user identifier inputs the document input information corresponding to the document into a system via the terminal according to the document assigned from the server.

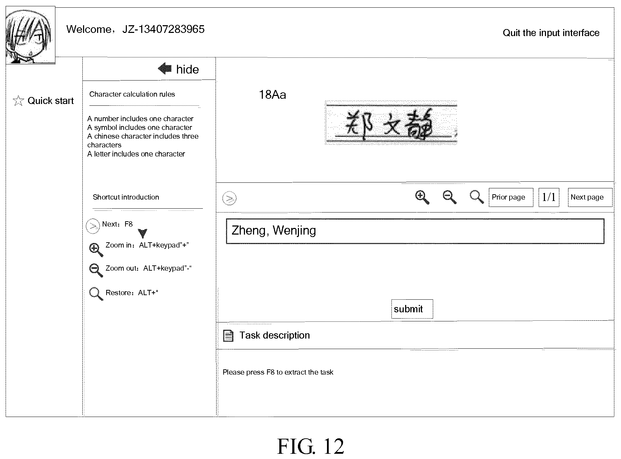

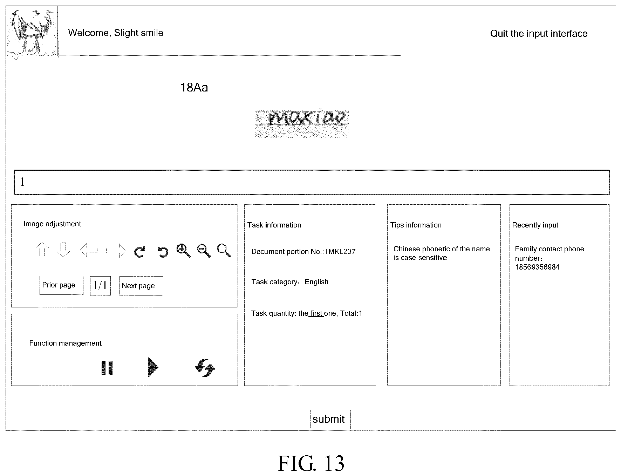

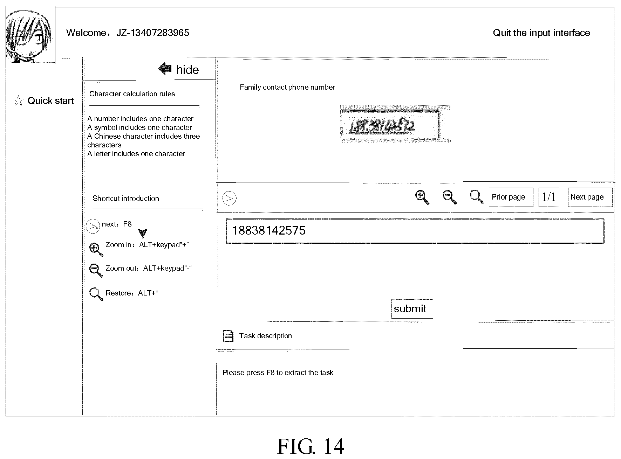

The document input information refers to handwritten information on the document, which can be a signature, contact information, a payment manner, and the like of a client who fills in the document. Types of the document input information includes Chinese, English, number, and check, as shown in FIGS 12-15. When the document input information is input via single check, for example when inputting a payment manner, available payment manner options on the document include self-payment and fiduciary payment, a number " 1" is preset corresponding to a first payment manner, that is, "self-payment", and a number "2" is preset corresponding to a second payment manner, that is, "fiduciary payment." The user can simply enter "1" or "2" to complete the check input. When the document input information is input via multiple checks, for example when inputting personal hobbies of a client, a situation of multiple checks may appear, and the user only needs to input each number corresponding to each option, and the input numbers can be separated by "/", ", ", and the like, such as" 1/2 "or" 1, 2 ".

In step 306, whether the document input information are the same is determined when an amount of the document input information reaches the preset number, if the document input information are the same, the method skips to step 308, otherwise, the method skips to step 310.

Since the server assigns the same document to the preset number of user identifiers, only when the server receives the preset number of document input information, the document input information is further processed. For example, the server assigns a name of a car owner on the same car insurance document to three user identifiers, and receives the name of the car owner successively according to a submission sequence of the three identifiers. When receiving three names of the car owner, the server determines whether the three names of the car owner are the same.

In step 308, the document input information is recorded as a correct document input information.

If the document input information are all the same, then the document input information has a high credibility and a relevant high correct rate, thus the document input information can be recorded as the correct document input information.

In step 310, the document is assigned to a review user identifier with a review permission, a review document input information corresponding to the document input through the review user identifier is received and recorded as a correct document input information.

The review user identifier with the review permission is different from a common user identifier with common permission. A user corresponding to the review user identifier with the review permission can re-input the document information which has had different input results.

If the document input information are different, it cannot be determined which document input information can be served as the correct document input information, thus the document is reassigned to the review user identifier with the review permission, so that the user corresponding to the review user identifier can input the document.

In step 312, the correct document input information is stored in a database.

After the correct document input information is determined, the server stores the correct document input information in the database.

In this embodiment, since each document is input multiple times and the input results is processed accordingly, the correct document input information is determined, which is different from inputting each document only once and determining the correct document input information according to manual review directly, thus improving a correct rate of the input.

In one embodiment, as shown in FIG. 4, the aforementioned step 304 includes following steps.

In step 314, whether the document input information corresponding to the document input through each user identifier is received within a preset first time threshold is detected, and if the document input information corresponding to the document input through each user identifier is received within the preset first time threshold, the method skips to step 324, otherwise, the method skips to step 334.

When inputting the document, each user corresponding to each user identifier may not submit the input information in time due to other urgent matters, which results in delay of inputting the document information. In order to prevent this from happening, a time limit for the input is provided for the user through the user identifier, i.e., the first time threshold is preset. The preset first time threshold can be 45 seconds, 2 minutes, and the like.

In step 324, the document input information is stored in the database.

If the document input information input through each user identifier is received within the preset first time threshold, that is, if each user corresponding to each user identifier submits the document input information in time, then the document input information is stored in the database.

In step 334, the document is retrieved and reassigned.

If the document input information input through each user identifier is not received within the preset first time threshold, that is, if each user corresponding to each user identifier does not submit the document input information in time, then the document is retrieved in a task pool and reassigned to a user corresponding to other user identifier to perform an input.

In the present embodiment, a time limitation is added in the process of receiving the document input information, so that the delay and procrastination of the input of document information due to untimely input of a single user is unlikely to happen, thus effectively improving an input efficiency of document information.

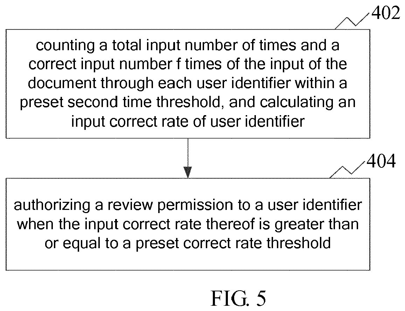

In an embodiment, as shown in FIG. 5, the method of inputting document information further includes an authorization process of the review permission.

In step 402, a total input number of times and a correct input number of times of the input of the document through each user identifier are counted within a preset second time threshold, and an input correct rate corresponding to each user identifier is calculated.

For example, when the second time threshold is one month, the total input number of times and the correct input number of times of the input of the document through each user identifier within one month are counted to calculate the input correct rate of each user identifier.

In step 404, when the input correct rate is greater than or equal to a preset correct rate threshold, the user identifier is authorized the review permission.

Similarly, the review permission is different from a common permission. For each user identifier, an original permission is the common permission, that is, the user corresponding to the user identifier can only input the document information once. When an input time reaches to the second preset time threshold, for example, the user inputs a first document information through the user identifier at 4:10 pm on September 1^{st}, 2016, then until 4:10 pm on October 1^{st}, 2016, the server counts the total input number of times and the correct input number of times of the input of the documents through the user identifier within this period of time, calculates the input correct rate of the user identifier, and authorizes the review permission to the user identifier when the input correct rate is greater than the preset correct rate threshold, for example the input correct rate of the user identifier is 92%, and the preset correct rate threshold is 90%.

Further, an ownership of the review permission for the user identifier is not permanently, because the authorization of the review permission is a regular update method. For example, the input correct rate of the aforementioned user identifier from 4:10 pm, October 1^{st}, 2016 to 4:10 pm, November 1^{st}, 2016 is 84%, which is less than the preset correct rate threshold 90%, then the review permission of the user identifier is updated as the common permission.

In the present embodiment, the input correct rate corresponding to the user identifier within the second preset time threshold is calculated and compared with the preset correct rate threshold. If the input correct rate is greater than the preset correct rate threshold, the review permission is then authorized to the user identifier. The document input information corresponding to the review user identifier with the review permission determined by above method has a higher correct rate than the document input information corresponding to the user identifier with common permission.

In one embodiment, if the document input information are not the same, then the document is assigned to the review user identifier with the review permission, a review document input information corresponding to the document input through the review user identifier is received and recorded as the correct document input information. Specifically, if the document input information are not the same, an input ratio of each document input information is calculated according to an input number of times of each document input information and a total input number of times of the document input information, and a maximum input ratio is determined. If the maximum input ratio is less than a preset ratio threshold, the document is assigned to the review user identifier with the review permission, and the review document input information corresponding to the document input through the review user identifier is received and recorded as the correct document input information. For example, the system assigns a document "Zhang Xiaoming" to five user identifiers. Input results corresponding to two of the five user identifiers are "Zhang Xiaomin", input results corresponding to two of the rest three of the five user identifiers are "Zhang Xiaoming", and input results corresponding to another one of the five user identifiers is "Zhang Xiaomingg". The input ratio of "Zhang Xiaomin", "Zhang Xiaoming", and "Zhang XiaoMingg" are calculated respectively. Since the total input number of times is five, the input ratio of "Zhang Xiaomin" is 40%, the input ratio of "Zhang Xiaoming" is 40%, and the input ratio of "Zhang XiaoMingg" is 20%, then the maximum input ratio is 40%. If the preset ratio threshold is 60%, the document input information "Zhang Xiaoming" is assigned to the review user identifier with the review permission, the review document input information input through the review user identifier is received and recorded as the correct document input information.

In the present embodiment, the maximum input ratio is determined and compared with the preset ratio threshold, if the maximum input ratio is less than the preset ratio threshold, then the document is assigned to the review user identifier with the review permission. By adding aforementioned steps, assignment times of the input of the document information is reduced when compared with assigning the document to the review user identifier with the review permission directly if the document input information are not the same.

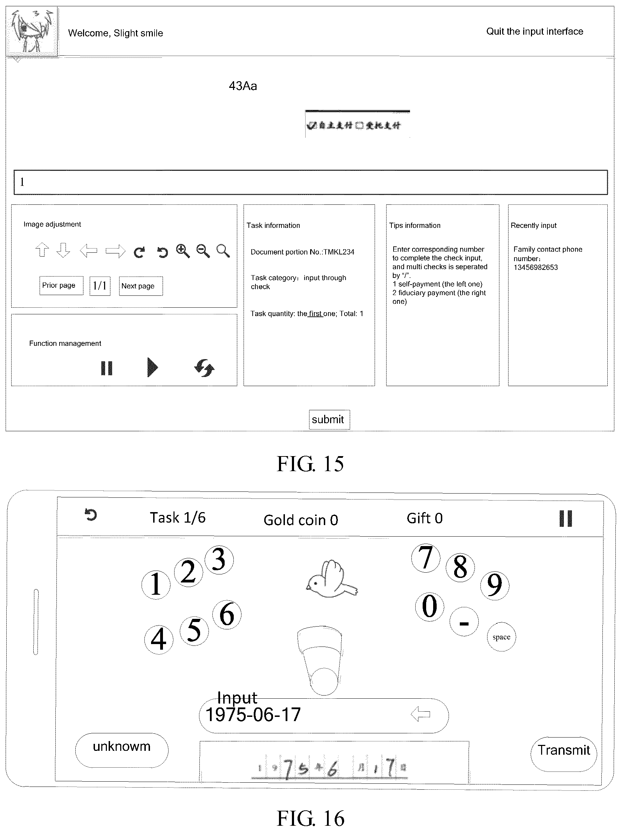

In one embodiment, the user identifiers include internal user identifiers leased line user identifiers, and part-time user identifiers. These user identifiers have different permissions, for example a part-time user identifier only has an input permission of personal information (excluding ID number) such as name, contacts, hobbies, and the like of a client who purchases a car insurance; a leased line user identifier further includes a input permission of an ID number and a plate number of the client who purchases the car insurance in addition to the above permission; and an internal user identifier further includes a input permission of relative information of a business in addition to the permissions of the part-time user identifier and the leased line user identifier. The users corresponding to such user identifiers can input document information through a PC as illustrated in FIGS 12 to 15, or input the document information through a mobile terminal as illustrated in FIG. 16.

In the present embodiment, the method of inputting document information further includes following steps. A document input amount corresponding to each user identifier within a third time threshold is counted. A preset document assigned amount corresponding to a user identifier is increased, if the document input amount corresponding to the user identifier is greater than or equal to the preset document assigned amount. The preset document assigned amount corresponding to the user identifier is decreased, if the document input amount corresponding to the user identifier is less than the preset document assigned amount.

In the present embodiment, by introducing the leased line user identifier and the part-time user identifier in addition to the internal user identifier, categories of the user identifiers are increased, that is, sources of input staffs are increased, therefore effectively improving the input efficiency of the document information. In addition, the preset document assigned amounts corresponding to different categories of the user identifiers are dynamically adjusted according to the document input amounts corresponding to different categories of the user identifiers, which further improves the input efficiency of the document information.

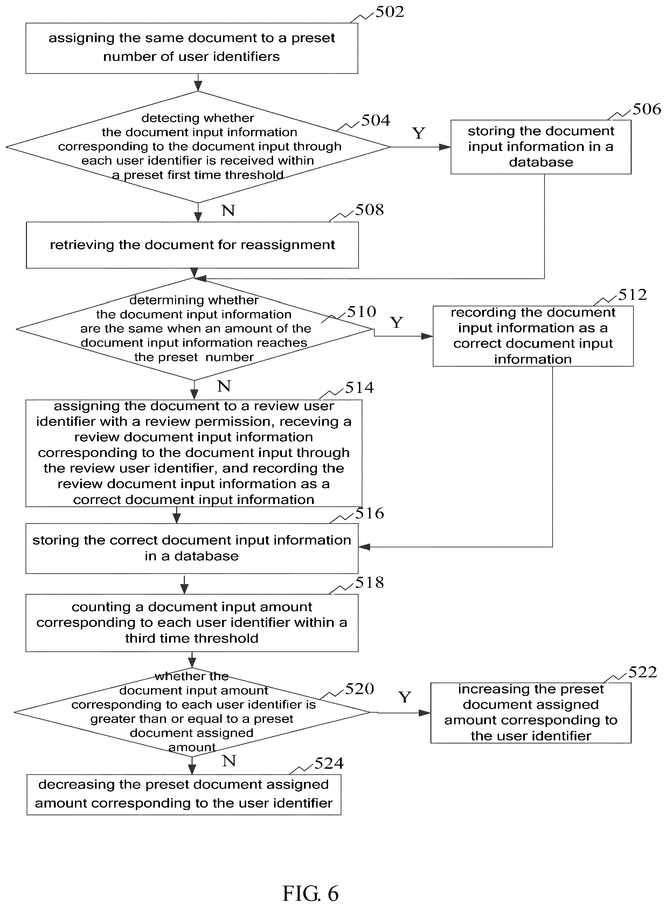

In one embodiment, as shown in FIG. 6, another method of inputting document information is provided, which includes following steps.

In step 502: the same document is assigned to a preset number of user identifiers.

Similarly, the document refers to a scanned image of a papery document that contains handwritten information. The document can be a scanned image of an entire document, such as a scanned image of an entire insurance policy, or a scanned image of a document portion obtained by cutting a document according to a document template, such as a scanned image of a document portion which contains handwritten name. The user identifier can be a phone number, an email account, a custom account, and the like.

In step 504, whether a document input information corresponding to the document input through each user identifier is received within a preset first time threshold is detected. If the document input information corresponding to the document input through each user identifier is received within the preset first time threshold, the method skips to step 506; otherwise, the method skips to step 508.

When inputting the document information, each user corresponding to each user identifier may not submit the input information in time due to other urgent matters, which results in delay of inputting the document information. In order to prevent this from happening, a time limit for the input is provided for the user through the user identifier, i.e., the first time threshold is preset. The preset first time threshold can be 45 seconds, 2 minutes, and the like.

In step 506, the document input information is stored in a database.

If the document input information input through each user identifier is received within the preset first time threshold, that is, if each user corresponding to each user identifier submits the document input information in time, then the document input information is stored in the database.

In step 508: the document is retrieved and reassigned.

If the document input information input through each user identifier is not received within the preset first time threshold, that is, if each user corresponding to each user identifier does not submit the document input information in time, then the document is retrieved in a task pool and reassigned to a user corresponding to other user identifier to perform an input.

In step 510, whether each document input information is the same is determined when an amount of the document input information reaches the preset number, if each document input information is the same, the method skips to step 512, otherwise, the method skips to step 514.

Since a server assigns the same document to the preset number of user identifiers, the document input information is further processed only when the server receives the preset number of document input information. For example, the preset number in this embodiment is two. The server assigns a contact of a car owner on the same car insurance document to two user identifiers, and receives the contact of the car owner successively according to a submission sequence of the two identifiers. When receiving two contacts of the car owner, the server determines whether the two contacts of the car owner are the same.

In step 512, the document input information is recorded as a correct document input information.

If the document input information are all the same, then the document input information has a high credibility and a relevant high correct rate, thus the document input information can be recorded as the correct document input information.

In step 514, the document is assigned to a review user identifier with a review permission, a review document input information corresponding to the document input through the review user identifier is received and recorded as a correct document input information.

The review user identifier with the review permission is different from a common user identifier with common permission. A method for determining the review user identifier with the review permission includes following steps. A total input number of times and a correct input number of times of the input of the document through each user identifier within a preset second time threshold (eg: three months) is counted. An input correct rate of each user identifier is calculated. The review permission is authorized to a user identifier when the input correct rate thereof is greater than or equal to a preset correct rate threshold.

In step 516, the correct document input information is stored in the database.

After the correct document input information is determined, the server stores the correct document input information in the database.

In step 518, a document input amount corresponding to each user identifier within a preset third time threshold is counted.

The user identifiers include internal user identifiers, leased line user identifiers, and part-time user identifiers, as permissions of which are different, input tasks assigned to which are different.

In step 520, whether the document input amount corresponding to each user identifier is greater than or equal to a preset document assigned amount is determined, if the document input amount corresponding to each user identifier is greater than or equal to the preset document assigned amount, the method skips to step 522; otherwise, the method skips to step 524.

In step 522, the preset document assigned amount corresponding to a user identifier is increased when the document input amount corresponding to the user identifier is greater than or equal to the preset document assigned amount.

In step 524, the preset document assigned amount corresponding to a user identifier is decreased when the document input amount corresponding to the user identifier is less than the preset document assigned amount.

In step 522 and step 524, the preset document assigned amount can be dynamically adjusted according to the document input amount and the preset document assigned amount corresponding to different user identifiers within the third time threshold.

In the present embodiment, since each document is input multiple times and the input results is processed accordingly, the correct document input information is determined, which is different from inputting each document only once and determining the correct document input information according to manual review directly, thus improving the correct rate of the input. When each user corresponding to each user identifier inputs the document information, a time limitation is added, which can effectively improve an input efficiency. More different categories of user identifiers are introduced, and the preset document assigned amount corresponding to different categories of the user identifiers are dynamically adjusted according to the document input amount of each category of the user identifiers within the preset time, which further improves the input efficiency.

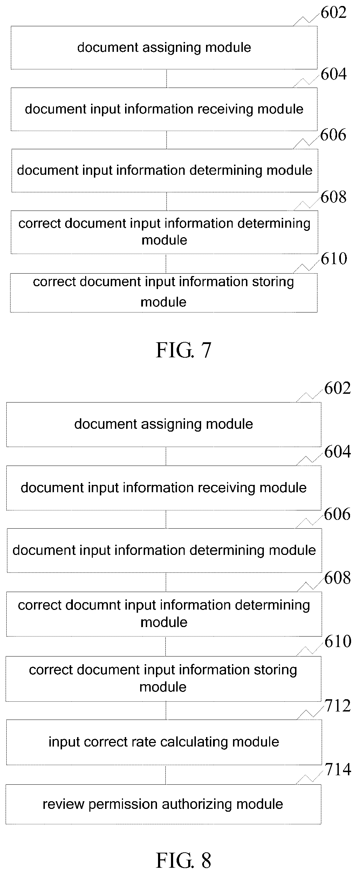

In one embodiment, a server is provided. An internal structure of the server can be as shown in FIG. 2. Each module described below can be implemented in whole or in part by software, hardware, or a combination thereof. As shown in FIG. 7, in one embodiment, the server includes a device of inputting document information, and the device includes a document assigning module 602, which is used for assigning the same document to a preset number of user identifiers; a document input information receiving module 604, which is used for receiving document input information corresponding to the document input through each user identifier; a document input information determining module 606, which is used for determining whether the document input information are the same when an amount of the document input information reaches the preset number; a correct document input information determining module 608, which is used for recording the document input information as a correct document when the input information are the same, assigning the document input information to a review user identifier with a review permission when the document input information are not the same, receiving a review document input information corresponding to the document input through the review user identifier, and recording the review document input information as the correct document input information; and a correct document input information storing module 610, which is used for storing the correct document input information in a database.

In one embodiment, as shown in FIG. 8, the device of inputting document information in the aforementioned server further includes an input correct rate calculating module 712, which is used for counting a total input number of times and a correct input number of times of the input of the document through each user identifier within a preset second time threshold and calculating an input correct rate corresponding to each user identifier; and a review permission authorizing module 714, which is used for authorizing the review permission to a user identifier when the input correct rate thereof is greater than or equal to a preset correct rate threshold.

In one embodiment, the correct document input information determining module 608 is used for calculating an input ratio of each category of document input information according to an input number of times of each category of document input information and a total input number of times of the document input information, if the document input information are not the same; determining a maximum input ratio; assigning the document to the review user identifier with the review permission if the maximum input ratio is less than a preset ratio threshold; receiving the review document input information corresponding to the document input through the review user identifier; and recording the review document input information as the correct document input information.

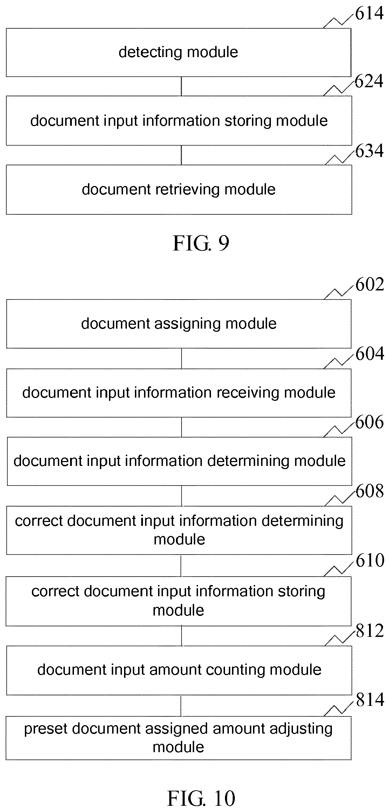

In one embodiment, as shown in FIG. 9, the document input information receiving module includes a detecting module 614, which is used for detecting whether the document input information corresponding to the document input through each user identifier is received within a preset first time threshold; a document input information storing module 624, which is used for storing the document input information in the database, if the document input information is received; and a document retrieving module 634, which is used for retrieving the document for reassignment, if the document input information is not received.

In one embodiment, the user identifiers include internal user identifiers, leased line user identifiers, and part-time user identifiers. In the present embodiment, as shown in FIG. 10, another server is provided, and the server includes another device of inputting document information. The device includes a document assigning module 602, which is used for assigning the same document to a preset number of user identifiers; a document input information receiving module 604, which is used for receiving document input information corresponding to the document input through each user identifier; a document input information determining module 606, which is used for determining whether the document input information are the same when an amount of the document input information reaches the preset number; a correct document input information determining module 608, which is used for recording the document input information as a correct document, if the input information are the same, assigning the document to a review user identifier with a review permission, if the document input information are not the same, receiving a review document input information corresponding to the document input through the review user identifier, and recording the review document input information as the correct document input information; a correct document input information storing module 610, which is used for storing the correct document input information in a database; a document input amount counting module 812, which is used for counting a document input amount corresponding to each user identifier within a third time threshold; and a preset document assigned amount adjusting module 814, which is used for increasing the preset document assigned amount corresponding to a user identifier, if the document input amount corresponding to the user identifier is greater than or equal to the preset document assigned amount, and decreasing the preset document assigned amount corresponding to a user identifier, if the document input amount corresponding to the user identifier is less than the preset document assigned amount.

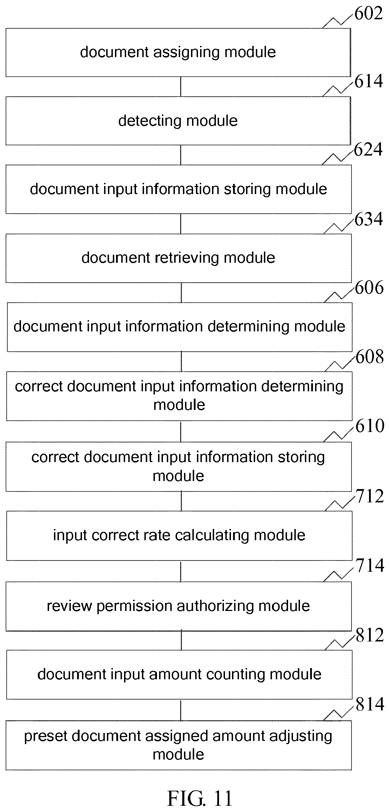

In one embodiment, the user identifiers includes internal user identifiers, leased line user identifiers, and part-time user identifiers. In the present embodiment, a further server is provided. As shown in FIG. 11, the server includes a device of inputting document information. The device includes a document assigning module 602, which is used for assigning the same document to a preset number of user identifiers; a detecting module 614, which is used for detecting whether the document input information corresponding to the document input through each user identifier is received within a preset first time threshold; a document input information storing module 624, which is used for storing the document input information in the database, if the document input information is received; and a document retrieving module 634, which is used for retrieving the document for reassignment, if the document input information is not received; a document input information determining module 606, which is used for determining whether the document input information are the same when an amount of the document input information reaches the preset number; a correct document input information determining module 608, which is used for recording the document input information as a correct document information when the input information are the same, assigning the document to a review user identifier with a review permission, if the document input information are not the same, receiving a review document input information corresponding to the document input through the review user identifier, and recording the review document input information as the correct document input information; a correct document input information storing module 610, which is used for storing the correct document input information in a database; an input correct rate calculating module 712, which is used for counting a total input number of times and a correct input number of times of the input of the document through each user identifier within a preset second time threshold and calculating an input correct rate corresponding to each user identifier; a review permission authorizing module 714, which is used for authorizing the review permission to a user identifier when the input correct rate thereof is greater than or equal to a preset correct rate threshold; a document input amount counting module 812, which is used for counting a document input amount corresponding to each user identifier within a third time threshold; and a preset document assigned amount adjusting module 814, which is used for increasing the preset document assigned amount corresponding to a user identifier when the document input amount corresponding to the user identifier is greater than or equal to the preset document assigned amount, and decreasing the preset document assigned amount corresponding to a user identifier when the document input amount corresponding to the user identifier is less than the preset document assigned amount.

Each module in the aformentioned device of inputting document information can be implemented in whole or in part by software, hardware and combinations thereof. The network interface may be an Ethernet card, a wireless network card, and the like. Each aforementioned module can be in a form of hardware embedded in or separated from the processor in the server, or in a form of software stored in the memory in the server, so that the processor calls and executes operation of each above module. The processor can be a central processing unit (CPU), a microprocessor, a microcontroller, or the like.

In one embodiment, one or more computer readable non-transitory storage medium is provided which stores computer-readable instructions that, when executed by one or more processors, cause the one or more processors to perform following steps. The same document is assigned to a preset number of user identifiers. A document input information corresponding to the document input through each user identifier is received. Whether the document input information are the same is determined, if an amount of the document input information reaches a preset number. If the document input information are the same, the document input information is recorded as a correct document input information, and if the document input information are not the same, the document is assigned to a review user identifier with a review permission. A review document input information corresponding to the document input through the review user identifier is received and recorded as the correct document input information. The correct document input information is stored in a database.

In one embodiment, the one or more processors perform the step that the document input information corresponding to the document input through each user identifier is received includes following steps. Whether the document input information corresponding to the document input through each user identifier is received within a preset first time threshold is detected. If the document input information is received, the document input information is stored in the database; and if the document input information is not received, the document is retrieved for reassignment.

In one embodiment, the one or more processors further perform the following steps. A total input number of times and a correct input number of times of the input of the document through each user identifier within a preset second time threshold is counted. An input correct rate corresponding to each user identifier is calculated. And the review permission is authorizied to a user identifier, when the input correct rate thereof is greater than or equal to a preset correct rate threshold.

In one embodiment, the one or more processors perform the steps that if the document input information are not the same, the document is assigned to a review user identifier with a review permission; a review document input information corresponding to the document input through the review user identifier is received; and the review document input information is recorded as the correct document input information, includes following steps. If the document input information are not the same, an input ratio of each category of the document input information is calculated according to an input number of times of each category of the document input information and a total input number of times of the document input information. A maximum input ratio is determined. And if the maximum input ratio is less than a preset ratio threshold, the document is assigned to the review user identifier with the review permission. The review document input information corresponding to the document input through the review user identifier is received and recorded as the correct document input information.

In one embodiment, the user identifiers comprises internal user identifiers, leased line user identifiers, and part-time user identifiers, and the one or more processors further performs following steps. A document input amount corresponding to each user identifier within a third time threshold is counted. If the document input amount corresponding to a user identifier is greater than or equal to a preset document assigned amount, the preset document assigned amount corresponding to the user identifier is increased. If the document input amount corresponding to a user identifier is less than the preset document assigned amount, the preset document assigned amount corresponding to the user identifier is decreased.

A person of ordinary skill in the art could understand that all or part of the processes for implementing the methods in the foregoing embodiments can be implemented by a computer program instructing relevant hardware. The program can be stored in a non-transitory computer-readable storage medium, and when executed can include the processes of the embodiments of the foregoing methods. The storage medium can be a magnetic disk, an optical disk, a read-only memory (ROM), and the like.

Each technical feature in foregoing embodiments can be combined casually. In order to make the description simple, all other possible combinations of the technical features in the foregoing embodiments are not described. However, as long as there is no conflict between combinations of the technical features, they should be considered as the scope of this manual.

The above-mentioned embodiments merely present several embodiments of the present disclosure, which are described specifically and in detail but should not be interpreted as limit to the scope of the present disclosure. It should be noted that those skilled in the art may make various modifications and improvements without departing from the concept of the present disclosure, all of which fall in the protection scope of the present disclosure. Therefore, the protection scope of the present disclosure shall be subject to the appended claims.

## Claims

1. A method of inputting document information, the method comprising:
assigning the same document to a preset number of user identifiers;
receiving document input information corresponding to the document input through each user identifier;
determining whether the document input information are the same, when an amount of the document input information reaches the preset number;
if the document input information are the same, recording the document input information as a correct document input information, and if the document input information are not the same, assigning the document to a review user identifier which has a review permission, receiving a review document input information corresponding to the document input through the review user identifier, and recording the review document input information as a correct document input information; and
storing the correct document input information in a database.

2. The method according to claim 1, wherein the receiving document input information corresponding to the document input through each user identifier comprises:
detecting whether the document input information corresponding to the document input through each user identifier is received within a preset first time threshold; and
if the document input information is received, storing the document input information in the database; and if the document input information is not received, retrieving the document for reassignment.

3. The method according to claim 1, further comprising:
counting a total input number of times and a correct input number of times of the input of the document through each user identifier within a preset second time threshold;
calculating an input correct rate of each user identifier; and
authorizing the review permission to a user identifier when the input correct rate thereof is greater than or equal to a preset correct rate threshold.

4. The method according to claim 1, wherein if the document input information are not the same, assigning the document to the review user identifier which has the review permission, receiving a review document input information of the document input through the review user identifier, and recording the review document input information as the correct document input information comprising:
if the document input information are not the same, calculating an input ratio of each document input information according to an input number of times of each document input information and a total input number of times of the document input information, and determining a maximum input ratio;
if the maximum input ratio is less than a preset ratio threshold, assigning the document to the review user identifier with the review permission; and
receiving the review document input information of the document input through the review user identifier, and recording the review document input information as the correct document input information.

5. The method according to claim 1, wherein the user identifiers comprise internal user identifiers, leased line user identifiers, and part-time user identifiers; and the method further comprises:
counting a document input amount of each user identifier within a third time threshold;
if the document input amount of a user identifier is greater than or equal to a preset document assigned amount, increasing the preset document input amount of the user identifier; if the document input amount of a user identifier is less than the preset document assigned amount, decreasing the preset document input amount of the user identifier.

6. A device of inputting document information, comprising:
a document assigning module configured to assign the same document to a preset number of user identifiers;
a document input information receiving module configured to receive document input information corresponding to the document input through each user identifier;
a document input information determining module configured to determine whether the document input information are the same, when an amount of the document input information reaches the preset number;
a correct document input information determining module configured to record the document input information as a correct document information when the document input information are the same, assign the document input information to a review user identifier with a review permission when the document input information are not the same, receive a review document input information of the document input through the review user identifier, and record the review document input information as a correct document input information; and
a correct document input information storing module configured to store the correct document input information in a database.

7. The device according to claim 6, wherein the document input information receiving module comprises:
a detecting module configured to detect whether the document input information corresponding to the document input through each user identifiers is received within a preset first time threshold;
a document input information storing module configured to store the document input information in the database when the document input information is received; and
a document input information retrieving module configured to retrieve the document input information for reassignment when the document input information is not received.

8. The device according to claim 6, further comprising:
an input correct rate calculating module configured to count a total input number of times and a correct input number of times of the input of the document through each user identifier within a preset second time threshold and calculate an input correct rate of each user identifier; and
a review permission authorizing module configured to authorize a review permission to a user identifier when the input correct rate thereof is greater than or equal to a preset correct rate threshold.

9. The device according to claim 6, wherein the correct document input information determining module is configured to calculate an input ratio of each document input information according to an input number of times of each document input information and a total input number of times of the document input information, when the document input information are not the same, determine a maximum input ratio, assign the document to the review user identifier with the review permission when the maximum input ratio is less than a preset ratio threshold, receive the review document input information of the document input through the review user identifier, and record the review document input information as the correct document input information.

10. The device according to claim 6, wherein the user identifiers comprise internal user identifiers, leased line user identifiers, and part-time user identifiers; and the device further comprises:
a document input amount counting module configured to count a document input amount of each user identifier within a third time threshold;
a preset document assignment adjustment module configured to increase the preset document input amount of a user identifier when the document input amount of the user identifier is greater than or equal to a preset document assigned amount; and decrease the preset document input amount of a user identifier when the document input amount of the user identifier is less than the preset document assigned amount.

11. A server comprising a memory and one or more processors, the memory storing computer-executable instructions, which, when executed by the processor causes the processor to perform following steps:
assigning the same document to a preset number of user identifiers;
receiving document input information corresponding to the document input through each user identifier;
determining whether the document input information are the same, when an amount of the document input information reaches the preset number;
if the document input information are the same, recording the document input information as a correct document input information, and if the document input information are not the same, assigning the document to a review user identifier which has a review permission, receiving a review document input information of the document input through the review user identifier, and recording the review document input information as a correct document input information; and
storing the correct document input information in a database.

12. The server according to claim 11, wherein the one or more processors perform the step of receiving document input information corresponding to the document input through each user identifier comprising:
detecting whether the document input information corresponding to the document input through each user identifier is received within a preset first time threshold; and
if the document input information is received, storing the document input information in the database; and if the document input information is not received, retrieving the document for reassignment.

13. The server according to claim 11, wherein the one or more processors further performs following steps:
counting a total input number of times and a correct input number of times of the input of the document through each user identifier within a preset second time threshold;
calculating an input correct rate of each user identifier; and
authorizing the review permission to a user identifier when the input correct rate thereof is greater than or equal to a preset correct rate threshold.

14. The server according to claim 11, wherein the one or more processors perform the steps of if the document input information are not the same, assigning the document to the review user identifier which has the review permission, receiving a review document input information corresponding to the document input through the review user identifier, and recording the review document input information as the correct document input information comprising:
if the document input information are not the same, calculating an input ratio of each document input information according to an input number of times of each document input information and a total input number of times of the document input information, and determining a maximum input ratio;
if the maximum input ratio is less than a preset ratio threshold, assigning the document to the review user identifier with the review permission; and
receiving the review document input information of the document input through the review user identifier, and recording the review document input information as the correct document input information.

15. The server according to claim 11, wherein the user identifiers comprises internal user identifiers, leased line user identifiers, and part-time user identifiers; and the one or more processors further performs following steps:
counting a document input amount of each user identifier within a third time threshold;
if the document input amount of a user identifier is greater than or equal to a preset document assigned amount, increasing the preset document input amount of the user identifier; if the document input amount of a user identifier is less than the preset document assigned amount, decreasing the preset document input amount of the user identifier.

16. One or more computer-executable non-transitory storage medium storing computer-executable instructions that, when executed on one or more processors, cause the one or more processors to perform following steps:
assigning the same document to a preset number of user identifiers;
receiving document input information corresponding to the document input through each user identifier;
determining whether the document input information are the same, when an amount of the document input information reaches the preset number;
if the document input information are the same, recording the document input information as a correct document input information, and if the document input information are not the same, assigning the document to a review user identifier which has a review permission, receiving a review document input information of the document input through the review user identifier, and recording the review document input information as a correct document input information; and
storing the correct document input information in a database.

17. The storage medium according to claim 16, wherein the one or more processors perform the step of receiving document input information corresponding to the document input through the user identifier comprising:
detecting whether the document input information corresponding to the document input through each user identifier is received within a preset first time threshold; and
if the document input information is received, storing the document input information in the database; and if the document input information is not received, retrieving the document for reassignment.

18. The storage medium according to claim 16, wherein the one or more processors further performs following steps:
counting a total input number of times and a correct input number of times of the input of the document through each user identifier within a preset second time threshold;
calculating an input correct rate of each user identifier; and
authorizing the review permission to a user identifier when the input correct rate thereof is greater than or equal to a preset correct rate threshold.

19. The storage medium according to claim 16, wherein the one or more processors perform the steps of if the document input information are not the same, assigning the document to a review user identifier which has a review permission, receiving a review document input information corresponding to the document input through the review user identifier, and recording the review document input information as a correct document input information comprising:
if the document input information are not the same, calculating an input ratio of each document input information according to an input number of times of each document input information and a total input number of times of the document input information, and determining a maximum input ratio;
if the maximum input ratio is less than a preset ratio threshold, assigning the document to the review user identifier with the review permission; and
receiving the review document input information of the document input through the review user identifier, and recording the review document input information as the correct document input information.

20. The storage medium according to claim 16, wherein the user identifiers comprises internal user identifiers, leased line user identifiers, and part-time user identifiers; and the one or more processors further performs following steps:
counting a document input amount of each user identifier within a third time threshold;
if the document input amount of a user identifier is greater than or equal to a preset document assigned amount, increasing the preset document input amount of the user identifier; if the document input amount of a user identifier is less than the preset document assigned amount, decreasing the preset document input amount of the user identifier.
